Europäisches Patentamt

European Patent Office

Office européen des brevets

(19)

(11) Numéro de publication : **0 514 362 A1**

## (12) DEMANDE DE BREVET EUROPEEN

(21) Numéro de dépôt : **92870069.9**

(22) Date de dépôt : **06.05.92**

(51) Int. Cl.$^5$ : **E21D 21/00, E02D 5/76, E04C 5/12, F16B 13/00**

(30) Priorité : **06.05.91 ES 9101360**

(43) Date de publication de la demande :
**19.11.92 Bulletin 92/47**

(84) Etats contractants désignés :
**AT BE CH DE DK FR GB GR IT LI LU MC NL PT SE**

(71) Demandeur : **Sagasta Galdos, Juana Elena**
**Calle Fernando el Catolico no 4**
**E-50005 Zaragoza (ES)**

(72) Inventeur : **Sagasta, Lucio Arana**
**Calle Fernando el Catolico No. 4**
**E-50005 Zaragoza (ES)**

(74) Mandataire : **Claeys, Pierre et al**
**Bureau Gevers rue de Livourne 7 Bte 1**
**B-1050 Bruxelles (BE)**

(54) **Manchon pour boulon d'ancrage.**

(57) Manchon pour boulon d'ancrage, du type comprenant une barre nervurée (3) pour assurer sa fixation et sa mise en tension dans un terrain déterminé (7), ce manchon comportant entre lui-même et la barre susdite, un élément de liaison (6) constitué par un composé à base de résines synthétiques, le manchon (1) comportant un pas de vis extérieur compatible avec un écrou de serrage (5) , le terrain récepteur (7) pouvant recevoir la barre nervurée (3) avec son manchon (1) dès qu'il a été foré, la rotation de l'écrou de serrage sur le manchon jusqu'à une plaque d'arrêt (4) assurant l'ancrage et la mise en tension de la barre nervurée (3) en constituant un ensemble de grande résistance mécanique.

EP 0 514 362 A1

La présente invention se rapporte à un manchon pour boulon d'ancrage.

L'invention envisage plus concrètement un moyen d'ancrage et de mise en tension de grande résistance, qui permet d'introduire une barre nervurée dans un terrain récepteur sans autre élément métallique supplémentaire quelconque, tel que des manchons ou des boulons accouplés à cette barre.

On sait qu'il existe actuellement des problèmes de mise en place de barres nervurées du fait des irrégularités géographiques du terrain, qui nécessitent un raccourcissement de la barre, avec pour conséquence une perte de matière et de temps, ce qui se répercute évidemment par une augmentation du coût.

Pour pouvoir réaliser ce travail de pénétration, la technique actuelle utilise des paires de manchons en une matière comme le chanvre ou similaire, qui sont d'un coût excessif, en présentant en outre l'inconvénient que les barres nervurées présentent d'importantes tolérances géométriques dans leurs nervures.

Pour éviter tous ces inconvénients, le but de la présente invention a été de prévoir un manchon pour boulon d'ancrage, contenant une barre nervurée présentant la nouveauté fondamentale de comprendre, entre sa partie inférieure et le corps du manchon, un composé de matières résineuses qui confèrent une résistance élevée à l'ensemble, en permettant la fixation et la mise en tension de la barre nervurée d'une manière facile et pratique, et avec des comportements mécaniques et de résistance élevés.

Pour faciliter l'explication, la présente description est accompagnée d'un dessin qui illustre un cas de réalisation présenté à titre d'exemple seulement.

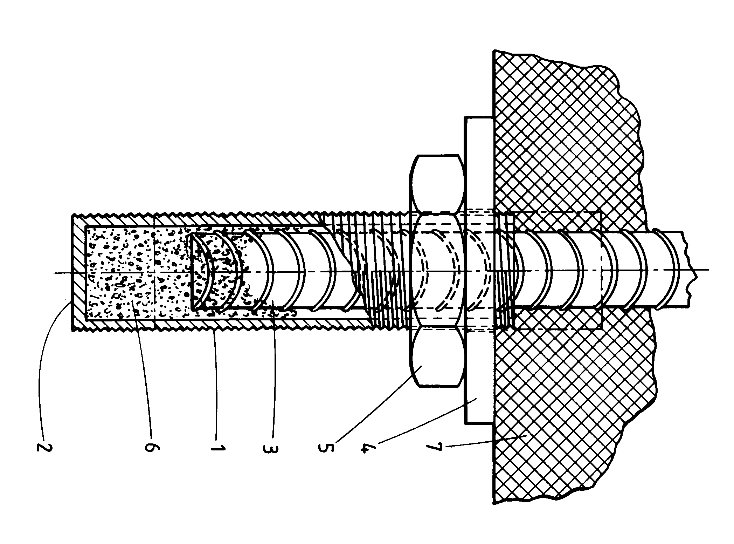

La figure unique montre des détails du manchon partiellement en coupe.

Si on se reporte à la figure, celle-ci illustre la mise en oeuvre d'un procédé d'ancrage et de mise en tension de barres nervurées, procédé dans lequel on fore d'abord le terrain récepteur 7, puis on met en place la barre nervurée 3 selon les désirs, avec son manchon 1 correspondant, ce manchon présentant un pas de vis extérieur.

Ensuite, on met en place la plaque d'arrêt 4 en mettant ensuite en tension la barre nervurée 3, pour la fixer au terrain récepteur, grâce à l'écrou de serrage et de mise en tension 5.

L'écrou 5 est monté sur le manchon fileté 1 de manière que, lorsqu'on fait tourner cet écrou, on provoque le déplacement et, en conséquence, la mise en tension sous des conditions de grande résistance, grâce à un composé 6 constitué de résines synthétiques et que l'on ajoute entre le manchon 1 et la barre 3, et dont l'étanchéité est garantie grâce au bouchon ou élément de fermeture 2 du manchon 1.

L'invention n'est évidemment pas limitée aux détails donnés et peut être mise ne pratique suivant d'autres formes de réalisation qui diffèrent de celle envisagée ci-dessus à titre d'exemple. Les éléments constitutifs peuvent être construits sous une forme et en des dimensions quelconques, en utilisant les matières les plus appropriées, et ce sans sortir du cadre du présent brevet.

**Revendications**

1. Manchon pour boulon d'ancrage, du type comprenant une barre nervurée (3) pour assurer sa fixation et sa mise en tension dans un terrain déterminé (7), caractérisé essentiellement en ce qu'il présente entre lui-même et ladite barre, un élément de liaison (6) constitué par un composé à base de résines synthétiques d'une résistance élevée, ce manchon (1) comportant un pas de vis extérieur compatible avec un écrou de serrage (5) monté sur ce manchon, et en ce que le terrain récepteur (7), après avoir été foré dans la mesure appropriée, peut recevoir la barre nervurée (3) avec son manchon (1) correspondant, la rotation de cet écrou de serrage sur le manchon jusqu'à une plaque d'arrêt (4) ou pièce similaire préalablement mise ne place assurant l'ancrage et la mise en tension de la barre nervurée en constituant un ensemble de grande résistance mécanique, grâce à l'action des résines ajoutées entre le manchon et la barre susdite.

EP 0 514 362 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | AU-B-578 850 (ARNALL WICKMAN PTY. LTD. ; CHEMFIX PTY. LTD.) <br> * page 3, ligne 33 - page 5, ligne 16; revendications 1-3,7,8; figures 3,4 * <br> --- | 1 | E21D21/00 <br> E02D5/76 <br> E04C5/12 <br> F16B13/00 |
| X | FR-A-2 461 093 (BERGWERKSVERBAND GMBH) <br> * page 5, ligne 6 - ligne 15; revendications 1,4,5,8; figure 3 * <br> ----- | 1 | |

**DOMAINES TECHNIQUES RECHERCHES (Int. Cl.5)**

E21D

Le présent rapport a été établi pour toutes les revendications

| Lieu de la recherche | Date d'achèvement de la recherche | Examinateur |
|---|---|---|
| LA HAYE | 02 SEPTEMBRE 1992 | CALAMIDA G. |

EPO FORM 1503 03.82 (P0402)